# EUROPÄISCHE PATENTSCHRIFT

(11) **EP 2 204 672 B1**
(45) Veröffentlichungstag und Bekanntmachung des Hinweises auf die Patenterteilung: **30.05.2012**
(21) Anmeldenummer: 09174970.5
(22) Anmeldetag: 04.11.2009
(51) Int. Cl.: G01S 13/93, B60W 50/08, G01S 17/93, B60W 10/00, B60W 30/08, B60W 30/16, B60W 30/06

(54) **Fahrerassistenzsystem und Verfahren für dessen Steuerung**
Driver assistance system and method for controlling it
Système d'assistance du conducteur et son procédé de commande

(30) Priorität: 02.01.2009 DE 102009000008
(43) Veröffentlichungstag der Anmeldung: 07.07.2010
(73) Patentinhaber: Robert Bosch GmbH, 70442 Stuttgart (DE)
(72) Erfinder: Fiess, Reinhold, 77770 Durbach (DE); Steinkogler, Sascha, 79106 Freiburg (DE)

(56) Entgegenhaltungen:
- EP-A2- 1 249 379
- EP-A2- 1 792 775
- WO-A1-2008/154736
- DE-A1- 10 007 501
- DE-A1- 10 147 443
- DE-A1-102006 026 370

## Beschreibung

### Stand der Technik

Die Erfindung betrifft ein Fahrerassistenzsystem nach dem Oberbegriff des Anspruchs 1. Weiterhin betrifft die Erfindung ein Verfahren für die Steuerung eines Fahrerassistenzsystems nach dem Oberbegriff des Anspruchs 5. Immer häufiger werden in Fahrerassistenzsystemen so genannte Laser-Imager eingesetzt, um das Fahrzeugumfeld zu erfassen. Das Fahrzeugumfeld wird dabei durch den Laser-Imager vorzugsweise mit dem so genannten Flying-Spot-Verfahren abgetastet. Dabei wird mit mindestens einem, beispielsweise rasterförmig abgelenkten Laserstrahl, die Umgebung im Wesentlichen punktförmig bestrahlt. Aus der von Objekten reflektierten und/oder gestreuten Laserstrahlung wird ein Abbild der Umgebung ermittelt. Zusätzlich kann mittels gepulster Laserstrahlung in Verbindung mit einer Laufzeitmessung auch die Entfernung von Objekten ermittelt werden. Insgesamt ist auf diese Weise eine dreidimensionale Erfassung des Fahrzeugumfelds möglich. Üblicherweise wird der Laserstrahl unter Verwendung mindestens eines horizontal und vertikal schwingenden mikromechanischen Spiegels (MEMS-Spiegel) in zwei Dimensionen abgelenkt. Die an Objekten im Fahrzeugumfeld reflektierte und gestreute Strahlung wird beispielsweise über eine Empfängeroptik einem Strahlungsdetektor zugeführt, dessen Ausgangssignal zum Zwecke der Bilderfassung weiterverarbeitet wird. Das Signal am Detektor hängt im einfachsten Fall invers proportional von dem Quadrat der Entfernung des detektierten Objekts ab. Eine größere Reichweite kann demzufolge durch eine quadratische Steigerung der Laserpulsleistung des Laser-Imagers erreicht werden. Eine weitere wichtige Kenngröße des Laser-Imagers, insbesondere bei seiner Verwendung in einem Fahrerassistenzsystem, ist das so genannte Blickfeld des Laser-Imagers. Das Blickfeld wird durch den Scanwinkel α bestimmt, der den möglichen Abtastbereich festlegt. Das Blickfeld ist, im Wesentlichen, von der Amplitude der Drehschwingung des schwingenden Spiegels abhängig. Zusätzlich kann der Blickwinkel noch durch eine im Strahlengang nachgeordnete Vergrößerungsoptik beeinflusst werden. Zur Ablenkung eines Schwingspiegels ist es bereits bekannt, die Halterung eines Schwingspiegels als Kammstruktur auszubilden, an die ein elektrisches Wechselfeld anlegbar ist. Durch das elektrische Wechselfeld wird der Schwingspiegel in gewünschter Weise ausgelenkt. Weiterhin ist es bekannt, einen Schwingspiegel auch elektromagnetisch auszulenken. Dazu trägt der von einem Permanentmagneten umgebene Schwingspiegel beispielsweise eine Leiterschleife. Bei Stromfluss durch diese Leiterschleife ergibt sich eine Auslenkung des Spiegels. Ein modernes Fahrerassistenzsystem umfasst zahlreiche Assistenzfunktionen, die auf die Mitwirkung eines Laser-Imagers angewiesen sind, an diesen jedoch unterschiedliche Anforderungen stellen. Die Anforderungen variieren insbesondere hinsichtlich diverser Betriebsparameter des Laser-Imagers, wie Abstandsreichweite und Blickwinkel. So muss ein für die Assistenzfunktion Einparkhilfe eingesetzter Laser-Imager ein größeres Blickfeld, jedoch eine geringere Reichweite aufweisen als ein für eine Pre-Crash-Erkennung eingesetzter Laser-Imager. Für die Auslegung der optischen Komponenten für die Beeinflussung des Sende- und Empfangsstrahl können sich daraus derart gegensätzliche Forderungen ergeben, dass ein praktischer Einsatz eines einzigen Laser-Imagers für unterschiedliche Assistenzfunktionen eines Fahrerassistenzsystems außerordentlich erschwert ist. Die praktische Schwierigkeit besteht also darin, die unterschiedlichen Anforderungen an den Laser-Imager möglichst unter einen Hut zu bekommen, um das Fahrerassistenzsystem mit möglichst wenigen Komponenten optimal betreiben zu können.

Aus JP-Patent Abstract 2007155984 A (Accession Number 2007-630149) ist ein optischer Scanner für einen Laserdrucker oder dergleichen, mit einem von einem Piezoaktor in Schwingungen versetzbaren Spiegel, bekannt. Dem Piezoaktor wird eine mit einer Offsetspannung überlagerte Steuerspannung zugeführt.

Die DE 10147 443 A zeigt ein Fahrerassistenzsystem mit einer Mehrzahl von Assistenzfunktionen, mit einem Lasersensor für die Erfassung des Fahrzeugumfelds, dessen Ausgangssignale für die Assistenzfunktionen des Fahrerassistenzsystems bereitgestellt werden, wobei der Lasersensor in unterschiedliche Betriebsarten steuerbar ist, und wobei das Fahrerassistenzsystem ein Funktionsmodul umfasst, das bei Aktivierung einer Assistenzfunktion des Fahrerassistenzsystems den Lasersensor in eine für diese Assistenzfunktion geeignete Betriebsart steuert.

Die gattungsbildende DE 10 2006 026 370 A beschreibt verschiedene Sensoren, wie Radar, Ultraschall, Laser oder Video, die bei einem Wechsel zwischen zwei Modi- bzw. Betriebsarten verschwenkt werden.

EP-A-1 249 379 offenbart ebenfalls unterschiedliche Sensoren, von denen ein beliebiger ausgewählt werden kann.

EP-A-1 792 775 beschreibt die Verwendung eines Laser-Imagers im Fahrzeug.

### Offenbarung der Erfindung

Der Erfindung liegt die Aufgabe zugrunde, ein mit einem Laser-Imager ausgestattetes Fahrerassistenzsystem dahingehend zu verbessern, dass der Laser-Imager für eine Mehrzahl von durch das Fahrerassistenzsystem bereit gestellten Assistenzfunktionen einsetzbar ist.

Diese Aufgabe wird durch das in Anspruch 1 genannte Fahrerassistenzsystem gelöst. Die Erfindung geht von der Erkenntnis aus, dass dieses Ziel durch eine an die jeweils aktivierte Assistenzfunktion des Fahrerassistenzsystems angepasste Steuerung von Betriebsparametern des Laser-Imagers erreichbar ist, wodurch dieser in einer an die jeweils aktivierte Assistenzfunktion angepasste Betriebsart arbeitet. Besonders vorteilhaft kann diese Steuerung automatisch erfolgen. Dies kann erfindungsgemäß dadurch erreicht werden, dass Zuordnungen zwischen Assistenzfunktion und Betriebsarten des Laser-Imagers in einer Speichereinrichtung gespeichert und bei Aktivierung einer Assistenzfunktion aus dieser Speichereinrichtung abgerufen werden. Eine besonders große Flexibilität wird noch dadurch reicht, dass eine Bedienungseinrichtung vorgesehen ist, mittels der der Fahrer in die Steuerung eingreifen und eine ihm genehme Betriebsart auswählen kann. Ein besonders großes Blickfeld ist dadurch erreichbar, dass der Ablenkspiegel des Laser-Imagers durch Anlegen einer Offsetspannung in unterschiedliche Zentrumslagen auslenkbar ist.

Ein erfindungsgemäßes Verfahren für die Steuerung eines Fahrerassistenzsystems geht aus Anspruch 5 hervor.

Weitere Vorteile ergeben sich aus den Unteransprüchen, der Beschreibung und der Zeichnung.

Ausführungsbeispiele der Erfindung werden im Folgenden unter Bezug auf die Zeichnung näher erläutert. Dabei zeigt
- Figur 1: ein Blockdiagramm eines Fahrerassistenzsystems;
- Figur 2: die wesentlichen Komponenten eines Laser-Imagers mit einem Ablenk- spiegel in einer ersten Ablenkposition;
- Figur 3: die wesentlichen Komponenten eines Laser-Imagers mit einem Ablenk- spiegel in einer zweiten Ablenkposition;
- Figur 4: die wesentlichen Komponenten eines Laser-Imagers mit einem Ablenk- spiegel in einer dritten Ablenkposition;
- Figur 5: in einem Diagramm einen Spannungsverlauf als Funktion der Zeit;
- Figur 6: eine Aufsicht auf einen Ablenkspiegel mit Ablenkeinrichtung;
- Figur 7: die wesentlichen Komponenten eines Laser-Imagers mit einem Ablenk- spiegel in einer ersten Ablenkposition;
- Figur 8: die wesentlichen Komponenten eines Laser-Imagers mit einem Ablenk- spiegel in einer zweiten Ablenkposition;
- Figur 9: die wesentlichen Komponenten eines Laser-Imagers mit einem Ablenk- spiegel in einer dritten Ablenkposition.

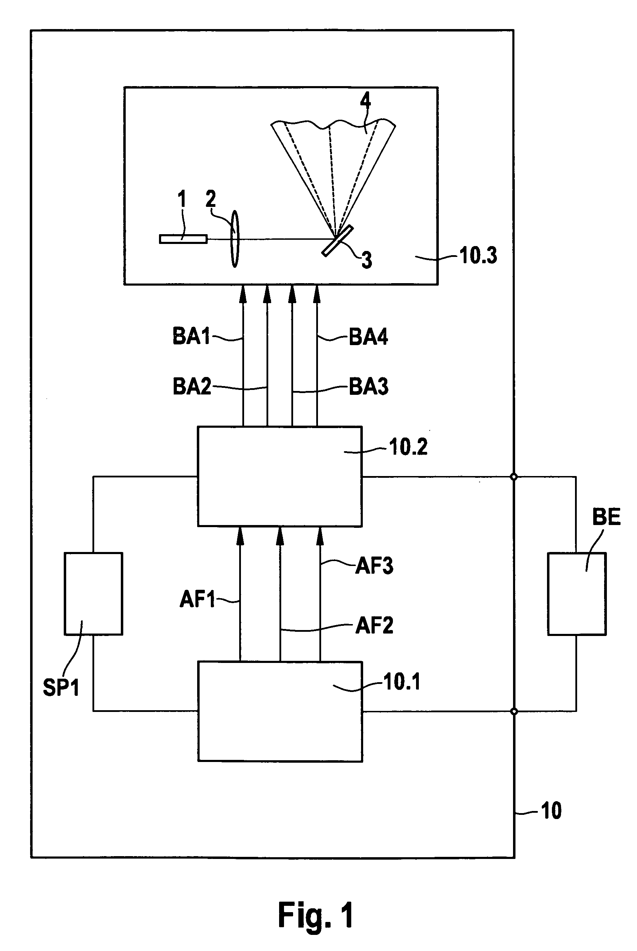

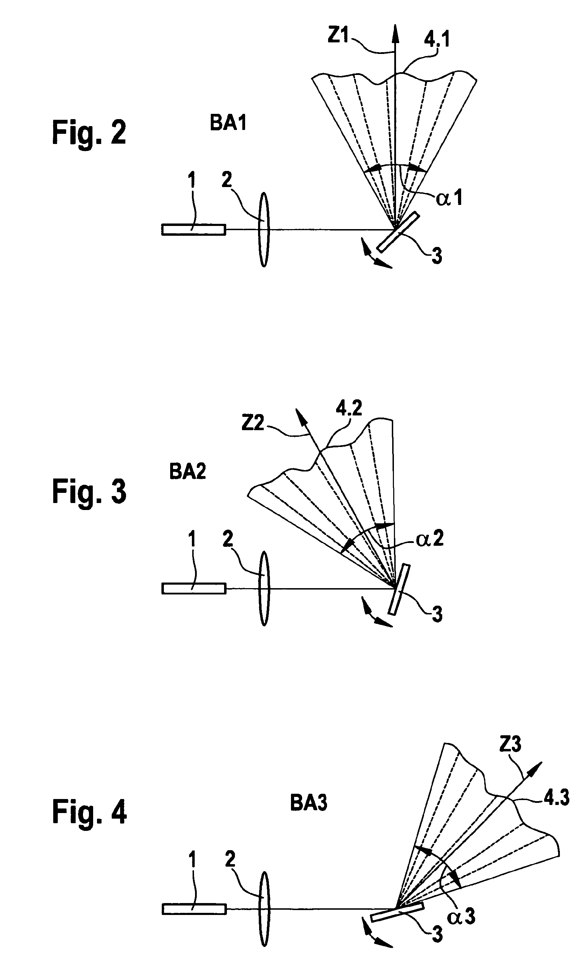

Figur 1 zeigt ein vereinfachtes Blockdiagramm eines Fahrerassistenzsystems 10. Das Fahrerassistenzsystem 10 umfasst ein Funktionsmodul 10.1, das eine Mehrzahl von Assistenzfunktionen für die Unterstützung des Fahrers bereitstellt. Beispielhaft sind hier drei Assistenzfunktionen AF1, AF2, AF3 dargestellt. Das Fahrerassistenzsystem 10 umfasst weiterhin mindestens einen Laser-Imager 10.3. Der Laser-Imager 10.3 umfasst einen Laser 1 als Strahlungsquelle. In Strahlausbreitungsrichtung folgt eine optische Einrichtung für die Fokussierung des Laserstrahls, beispielsweise eine Linse 2 und ein Ablenkspiegel 3 für die Ablenkung des Laserstrahls. Die Ablenkung des Laserstrahls erfolgt vorzugsweise in dem so genannten Flying-Spot-Verfahren, um das Umfeld des Fahrzeugs abzutasten. Der Ablenkspiegel kann dazu vorzugsweise in zwei Dimensionen ausgelenkt werden. An Objekten in dem Umfeld des Fahrzeugs reflektierte Strahlung wird von nicht im Einzelnen dargestellten Empfangseinrichtungen des Laser-Imagers 10.3 aufgenommen und ausgewertet, um auf diese Weise ein Bild des Fahrzeugumfelds zu erhalten. Der Laser-Imager 10.3 kann zweckmäßig in unterschiedlichen Betriebsarten, beispielsweise den Betriebsarten BA1, BA2, BA3, betrieben werden. Die Auswahl und Steuerung der geeigneten Betriebsart erfolgt durch ein Funktionsmodul 10.2, dem eingangsseitig Signale über die jeweils ausgewählte Assistenzfunktion zugeführt werden. Die unterschiedlichen Betriebsarten BA1, BA2, BA3 des Laser-Imagers 10.3 unterscheiden sich insbesondere durch die Lage und Ausdehnung des Blickfeldes des Laser-Imagers, und die Abstandsreichweite, die wiederum von der Pulsleistung des Lasers 1 abhängig ist. Dies wird im Folgenden unter Bezug auf Figur 2, Figur 3 und Figur 4 weiter ausgeführt, in denen unterschiedliche Betriebsarten des Laser-Imagers 10.3 schematisch dargestellt sind. Figur 2 erläutert die Betriebsart BA1. In der Betriebsart BA1 wird der Laserstrahl von dem Ablenkspiegel 3 mit einem Scanwinkel α1 um eine Zentrumslage Z1 ausgelenkt. Mit einer Pulsleistung P1 wird eine Abstandsreichweite 4.1 erreicht. Figur 3 erläutert die Betriebsart BA2. In der Betriebsart BA2 wird der Laserstrahl von dem Ablenkspiegel 3 mit einem Scanwinkel α2 um eine Zentrumslage Z2 ausgelenkt. Mit einer Pulsleistung P2 wird eine Abstandsreichweite 4.2 erreicht. Figur 4 erläutert die Betriebsart BA3. In der Betriebsart BA3 wird der Laserstrahl von dem Ablenkspiegel 3 mit einem Scanwinkel α3 um eine Zentrumslage Z3 ausgelenkt. Mit einer Pulsleistung P3 wird eine Abstandsreichweite 4.3 erreicht. Die Zentrumslagen Z1, Z2, Z3 sind in der Regel unterschiedlich. Die Pulsleistungen P1, P2, P3 und die Scanwinkel α1, α2, α3 können dagegen auch in allen Betriebsarten gleich groß oder, in Abhängigkeit von dem jeweiligen Anwendungsfall, auch unterschiedlich sein.

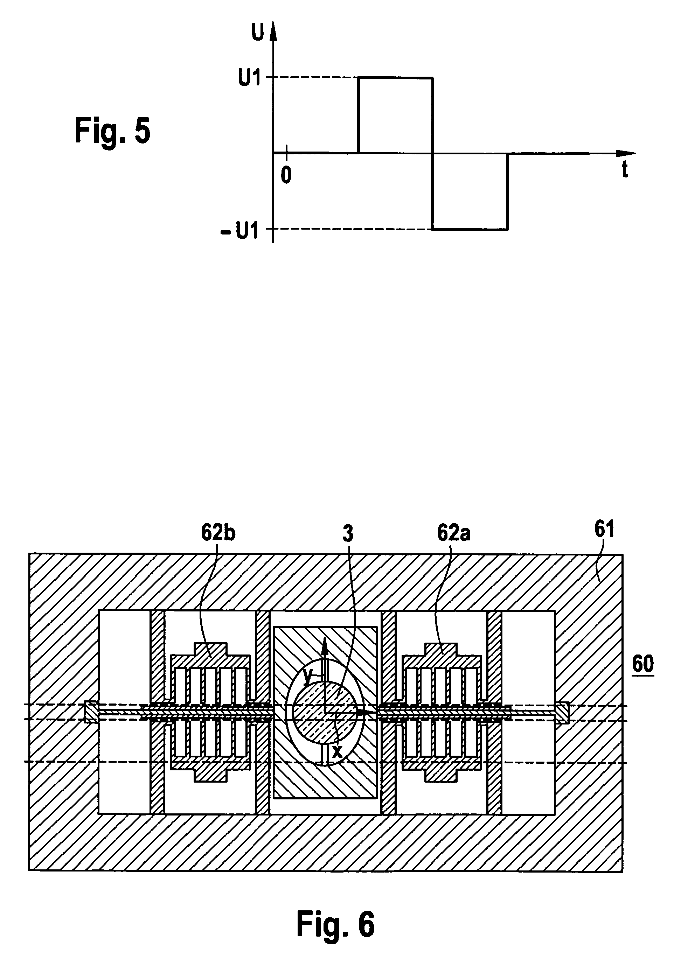

Als Ablenkspiegel 3 des Laser-Imagers 10.3 ist ein mikromechanischer Spiegel eingesetzt, der auch als MEMS - Spiegel bezeichnet wird (MEMS = Mikro-Elektro-Mechanisches System). Eine Aufsicht auf ein Spiegelsystem 60 mit einem derartigen Ablenkspiegel 3 mit Ablenkungseinrichtung und Halteeinrichtung in Chipstruktur ist in Figur 6 dargestellt. Die Halteeinrichtung besteht aus einem Rahmen 61, der eine zentrale Ausnehmung aufweist. In der Ausnehmung sind zwei Kammstrukturen 62a, 62b angeordnet, mittels derer der Ablenkspiegel 3 zumindest drehbeweglich, insbesondere aber in zwei Dimensionen schwingungsfähig, in dem Rahmen 61 gelagert ist. Eine Auslenkung des Ablenkspiegels 3 erfolgt durch Anlegen einer Wechselspannung an die Kammstrukturen 62a, 62b. Die Größe des Scanwinkels α1, α2, α3 wird im Wesentlichen durch die Höhe der angelegten Spannung bestimmt. Die Zentrumslagen Z1, Z2, Z3 werden vorteilhaft durch eine zusätzlich an die Kammstrukturen 62a, 62b angelegte Gleichspannung (Offsetspannung) ausgewählt. Ein geeigneter Spannungsverlauf ist beispielsweise in Figur 5 dargestellt. Bei der Spannung U1 ist beispielsweise die Zentrumslage Z1 ausgewählt, bei der Spannung -U1 die Zentrumslage Z3 und bei der Spannung 0 die Zentrumslage Z2.

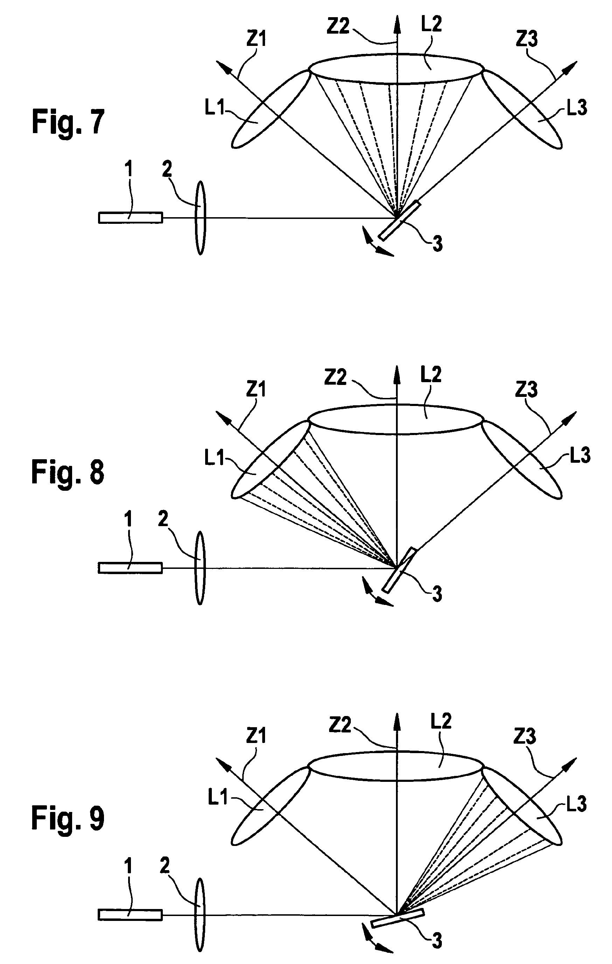

Gemäß einer vorteilhaften weiteren Ausgestaltung des erfindungsgemäßen Fahrerassistenzsystems kann durch zusätzlich in den Strahlengang des Laser-Imagers 10.3 eingebrachte optische Komponenten, wie beispielsweise Linsen, eine gewünschte Strahlformung des das Fahrzeugumfeld abtastenden Laserstrahls erreicht werden. Ausführungsbeispiele dazu werden im Folgenden unter Bezug auf Figur 7, Figur 8 und Figur 9 beschrieben. In allen drei genannten Ausführungsbeispielen sind Linsen L1, L2, L3 vorgesehen, wobei die Linse L1 der Zentrumslage Z1, die Linse L2 der Zentrumslage Z2 und die Linse L3 der Zentrumslage Z3 zugeordnet ist. In Figur 7 ist der Abtastspiegel durch eine angelegte Offsetspannung derart vorgespannt, dass er in die Zentrumslage Z2 ausgerichtet ist. Der von dem Ablenkspiegel 3 abgelenkte Laserstrahl wird somit durch die Linse 2 beeinflusst. Eine analoge Betrachtung gilt für die in Figur 8 und Figur 9 dargestellten Ausführungsbeispiele.

Im Folgenden werden Betriebsarten des Laser-Imagers 10.3 beschrieben. Die Betriebsarten können, im Wesentlichen, durch folgende Betriebsparameter gekennzeichnet werden: Pulsleistung des Lasers, Zentrumslage des Ablenkspiegels, Scanwinkel, Änderungsgeschwindigkeit des Scanwinkels. Aus Gründen der Vereinfachung bezieht sich die Beschreibung überwiegend immer nur auf eine eindimensionale Auslenkung des Ablenkspiegels 3. Analoge Betrachtungen treffen auch jeweils auf eine mehrdimensionale, insbesondere zweidimensionale, Auslenkung des Ablenkspiegels 3 zu.

In einer ersten Betriebsart BA1 (Figur 2), die auch als "normale" Betriebsart bezeichnet werden könnte, ist die Null-Lage des Ablenkspiegels 3 in Richtung der Zentrumslage Z1 ausgerichtet. Der Ablenkspiegel 3 wird mit dem Scanwinkel α1 um die Null-Lage ausgelenkt. Mit einer Pulsleistung P1 des Lasers 1 wird eine Abstandsreichweite 4.1 erreicht. Bereits bei dieser normalen Betriebsart sind, im Sinne der erfindungsgemäßen Lösung, Variationen von Betriebsparametern denkbar, um eine optimale Anpassung an Assistenzfunktionen des Fahrerassistenzsystems zu erreichen. Beispielsweise kann der Scanwinkel im Rahmen bauartbedingter Grenzen variiert werden, um ein größeres oder kleineres Blickfeld abzudecken. Weiterhin kann die Pulsleistung des Lasers 1 variiert werden, um eine kleinere oder größere Abstandsreichweite zu erzielen.

In weiteren Betriebsarten BA2, BA3 (Figur 3 und Figur 4), kann, durch Beaufschlagung des Ablenkspiegels 3 mit einer Offsetspannung, die Null-Lage des Ablenkspiegels in die Zentrumslage Z2 oder Z3 ausgerichtet werden. Die Scanwinkel α2, α3 können dabei mit dem Scanwinkel α1 übereinstimmen oder von diesem abweichen. Die Pulsleistung des Lasers 1 kann ebenfalls mit der Pulsleistung des Lasers 1 in der Betriebsart BA1 übereinstimmen oder auch von dieser abweichen. In der Praxis ist die Größe des Scanwinkels bauartbedingt begrenzt. Daraus ergibt sich, dass auch das in einer bestimmten Zentrumslage des Ablenkspiegels abdeckbare Blickfeld des Laser-Imagers 10.3 begrenzt ist. In einer vorteilhaften weiteren Betriebsart BA4, die sich gedanklich als eine Kombination der Betriebsarten BA1, BA2, BA3 zusammen setzen lässt, kann jedoch ein wesentlich größeres Blickfeld abgedeckt werden. Dazu wird der Ablenkspiegel 3, gemäß Betriebsart BA2, zunächst mittels einer entsprechenden Offsetspannung in die Zentrumslage Z2 gebracht. Das mit dem Scanwinkel α2 erreichbare Blickfeld wird mit dem Flying-Spot-Verfahren abgetastet. Die durch Reflexion an Objekten gewonnenen Bilddaten werden zwischengespeichert. In einem nächsten Schritt, wird, durch Änderung der Offsetspannung, der Ablenkspiegel, entsprechend Betriebsart BA1, in die Zentrumslage Z1 gebracht. Das mit dem Scanwinkel α1 erreichbare Blickfeld wird mit dem Flying-Spot-Verfahren abgetastet. Die gewonnenen Bilddaten werden wiederum zwischengespeichert. In einem dritten Schritt wird, durch Änderung der Offsetspannung, der Ablenkspiegel 3, entsprechend Betriebsart BA3, in die Zentrumslage Z3 überführt. Das mit dem Scanwinkel α3 erreichbare Blickfeld wird mit dem Flying-Spot-Verfahren abgetastet. Die in diesem dritten Schritt gewonnenen Bilddaten werden mit den in Schritt 1 und Schritt 2 gewonnenen und zunächst zwischengespeicherten Bilddaten kombiniert. Durch diese Betriebsart BA4 lässt sich ein sehr weites Blickfeld erfassen, das sich praktisch aus der Summe der Scanwinkel ergibt. Die Betriebsart BA4 ist besonders für eine Assistenzfunktion geeignet, die den Fahrer bei einem Parkvorgang oder bei einer Einfahrt in eine räumlich beengte Zufahrt unterstützt. Durch das sehr breite Blickfeld können Hindernisse auch im Seitenbereich des Fahrzeugs noch gut erfasst werden.

Das Anlegen einer Offsetspannung an den Ablenkspiegel 3 kann auch funktionsbedingt erfolgen. Wird beispielsweise der Laser-Imager 10.3 in dem Rahmen einer Assistenzfunktion mit Precrasherkennung bei einer Fahrt mit hoher Geschwindigkeit eingesetzt, dann reicht ein eingeschränkter Blickwinkel, etwa entsprechend der Betriebsart BA1 in Figur 2, aus. Will der Fahrer anschließend ein Manöver bei niedriger Geschwindigkeit durchführen oder beispielsweise Einparken, dann können Hindernisse im seitlichen Bereich des Fahrzeugs von Bedeutung werden. Der Ablenkspiegel 3 des Laser-Imagers 10.3 kann dann, durch Anlegen einer geeigneten Offsetspannung, gemäß den Betriebsarten BA2 und BA3 in die aus Figur 3 bzw. Figur 4 ersichtliche Position gebracht werden.

Eine weitere funktionale Erweiterung kann dadurch erfolgen, dass in die sequentiell angesteuerten Blickfelder, gemäß der in Figur 7, Figur 8 und Figur 9 dargestellten Ausführungsbeispiele, optische Elemente, insbesondere Linsen L1, L2, L3 für die Strahlformung eingebracht werden. Dabei können die optischen Eigenschaften der Linsen L1, L2, L3 vorteilhaft unterschiedlich sein. Etwa derart, dass mittels der Linsen L1 und L3 eine Fokussierung im Nahbereich und mittels der Linse L2 eine Fokussierung im Fernbereich erfolgt.

Besonders vorteilhaft kann die einer Assistenzfunktion AF1, AF2, AF3 zuzuordnende Betriebsart BA1, BA2, BA3, BA4 im Rahmen einer Applikation festgelegt und in einer Speichereinrichtung SP1 gespeichert werden. Die Speichereinrichtung SP1 kann dabei auch ein Bestandteil des Fahrerassistenzsystems 10 sein. Eine besonders große Flexibilität ist noch durch eine zusätzliche Bedienungseinrichtung BE erreichbar, die es dem Fahrer, bei Bedarf, ermöglicht, die ihm geeignet erscheinende Betriebsart BA1, BA2, BA3, BA4 manuell auszuwählen.

Besonders vorteilhaft können Betriebsarten des Laser-Imagers 10.3 auch in Abhängigkeit von Betriebsparametern des Fahrzeugs, wie insbesondere dessen Geschwindigkeit, ausgewählt werden. So kann beispielsweise bei hoher Geschwindigkeit des Fahrzeugs die Betriebsart BA1 (Figur 2) ausgewählt werden, bei der der Ablenkspiegel 3 des Laser-Imagers 10.3 die Zentrumslage Z1 einnimmt und im Bereich des Scanwinkels α1 abgelenkt wird. Hierdurch wird hauptsächlich das in Fahrtrichtung vor dem Fahrzeug liegende Fahrzeugumfeld abgetastet.

Besonders vorteilhaft können Betriebsarten auch in Abhängigkeit von der Verkehrssituation ausgewählt werden. Bei besonders dichtem Verkehr kann es zweckmäßig sein, eine Betriebsart auszuwählen, die sich durch eine hohe Abtastrate auszeichnet, bei der also der Winkelbereich des Scanwinkels schnell durchlaufen wird. Dadurch können schnelle Änderungen der Verkehrssituation zeitnah erfasst werden.

## Patentansprüche

1. Fahrerassistenzsystem (10) mit einer Mehrzahl von Assistenzfunktionen (AF1, AF2, AF3), wie Parkassistent, Precrasherkennung, LKS (Lane Keeping Support) und dergleichen, mit einem Laser-Imager (10.3) für die Erfassung des Fahrzeugumfelds, dessen Ausgangssignale für die Assistenzfunktionen (AF1, AF2, AF3) des Fahrerassistenzsystems (10) bereitgestellt werden, wobei der Laser-Imager (10.3) in unterschiedliche Betriebsarten (BA1, BA2, BA3, BA4) steuerbar ist, und das Fahrerassistenzsystem (10) ein Funktionsmodus (10.2) umfasst, das bei Aktivierung einer Assistenzfunktion (AF1, AF2, AF3) des Fahrerassistenzsystems (10) den Laser-Imager (10.3) in eine für diese Assistenzfunktion (AF1, AF2, AF3) geeignete Betriebsart (BA1, BA2, BA3, BA4) steuert, **dadurch gekennzeichnet, dass** eine Bedienungseinrichtung (BE) vorgesehen ist, durch deren Betätigung der Fahrer eine Betriebsart (BA1, BA2, BA3, BA4) des Laser-Imagers (10.3) manuell auswählen kann.

2. Fahrerassistenzsystem (10) nach Anspruch 1, **dadurch gekennzeichnet, dass** das Fahrerassistenzsystem (10) eine Speichereinrichtung (SP1) umfasst, in der Zuordnungen von Betriebsarten (BA1, BA2, BA3, BA4) des Laser-Imagers (10.3) zu Assistenzfunktionen (AF1, AF2, AF3) des Fahrerassistenzsystems (10) gespeichert sind, derart, dass bei Aktivierung einer Assistenzfunktion (AF1, AF2, AF3) der Laser-Imager (10.3) automatisch in eine zu der aktivierten Assistenzfunktion (AF1, AF2, AF3) passende Betriebsart (BA1, BA2, BA3, BA4) steuerbar ist.

3. Fahrerassistenzsystem (10) nach einem der vorhergehenden Ansprüche, **dadurch gekennzeichnet, dass** dem Laser-Imager (10.3) eine Offsetspannung zuführbar ist, mit der der Ablenkspiegel (3) des Laser-Imagers (10.3) in eine gewünschte Zentrumslage (Z1, Z2, Z3) auslenkbar ist.

4. Verfahren für die Steuerung eines Fahrerassistenzsystems (10) mit einer Mehrzahl von Assistenzfunktionen (AF1, AF2, AF3) wie Parkassistent, Precrasherkennung und dergleichen, mit einem Laser-Imager (10.3) für die Erfassung des Fahrzeugumfelds, dessen Ausgangssignale für die Assistenzfunktionen (AF1, AF2, AF3) des Fahrerassistenzsystems (10) bereitgestellt werden, wobei der Laser-Imager (10.3) in unterschiedliche Betriebsarten (BA1, BA2, BA3, BA4) steuerbar ist, wobei bei Aktivierung einer bestimmten Assistenzfunktion (AF1, AF2, AF3) der Laser-Imager (10.3) in eine an die jeweils aktivierte Assistenzfunktion (AF1, AF2, AF3) angepasste Betriebsart (BA1, BA2, BA3, BA4) gesteuert wird, **dadurch gekennzeichnet, dass** eine Betriebsart (BA1, BA2, BA3, BA4) des Laser-Imagers (10.3) mittels einer Bedienungseinrichtung (BE) manuell ausgewählt wird.

5. Verfahren nach Anspruch 4, **dadurch gekennzeichnet, dass** der Ablenkspiegel (3) des Laser-Imagers (10.3) in eine erste Zentrumslage (Z1, Z2, Z3) ausgelenkt wird, dass mit dieser Auslenkung des Ablenkspiegels (3) ein erstes Bild der Fahrzeugumgebung erfasst wird, dass das erste Bild gespeichert wird, dass anschließend der Ablenkspiegel (3) des Laser-Imagers (10.3) in mindestens eine zweite Zentrumslage (Z1, Z2, Z3) ausgelenkt wird, dass in dieser Zentrumslage (Z1, Z2, Z3) des Ablenkspiegels (3) ein zweites Bild der Fahrzeugumgebung erfasst wird und dass anschließend das erste und das zweite Bild kombiniert werden.

6. Verfahren nach einem der Ansprüche 4 - 5, **dadurch gekennzeichnet, dass** eine Betriebsart des Laser-Imagers in Abhängigkeit von Betriebsparametern des Fahrzeugs, insbesondere von dessen Geschwindigkeit ausgewählt wird.

7. Verfahren nach einem der Ansprüche 4 - 6, **dadurch gekennzeichnet, dass** eine Betriebsart des Laser-Imagers in Abhängigkeit von der Verkehrssituation ausgewählt wird.

8. Verfahren nach einem der Ansprüche 4 - 7, **dadurch gekennzeichnet, dass** das die Ausdehnung des von dem Laser-Imager erfassten Blickfelds geschwindigkeitsabhängig variiert wird.

9. Verfahren nach einem der Ansprüche 4 - 8, **dadurch gekennzeichnet, dass** die Ausdehnung des Blickfelds mit abnehmender Geschwindigkeit aufgeweitet wird.

10. Verfahren nach einem der Ansprüche 4 - 9, **dadurch gekennzeichnet, dass** das Blickfeld in einer Dimension erweitert wird.

11. Verfahren nach einem der vorhergehenden Ansprüche, **dadurch gekennzeichnet, dass** das Blickfeld in zwei Dimensionen verändert wird.

## Claims

1. Driver assistance system (10) having a multiplicity of assistance functions (AF1, AF2, AF3) such as a parking assistant, precrash detection system, LKS (Lane Keeping Support) and the like, having a laser imager (10.3) for sensing the surroundings of the vehicle, the output signals of which are made available for the assistance functions (AF1, AF2, AF3) of the driver assistance system (10), wherein the laser imager (10.3) can be adjusted to different operating modes (BA1, BA2, BA3, BA4), and the driver assistance system (10) comprises a function module (10.2) which, when an assistance function (AF1, AF2, AF3) of the driver assistance system (10) is activated, adjusts the laser imager (10.3) in an operating mode (BA1, BA2, BA3, BA4) which is suitable for this assistance function (AF1, AF2, AF3), **characterized in that** an operator control device (BE) is provided whose activation allows the driver to select manually an operating mode (BA1, BA2, BA3, BA4) of the laser imager (10.3).

2. Driver assistance system (10) according to Claim 1, **characterized in that** the driver assistance system (10) comprises a memory device (SP1) in which assignments of operating modes (BA1, BA2, BA3, BA4) of the laser imager (10.3) to assistance functions (AF1, AF2, AF3) of the driver assistance system (10) are stored in such a way that when an assistance function (AF1, AF2, AF3) is activated, the laser imager (10.3) can be adjusted automatically to an operating mode (BA1, BA2, BA3, BA4) which suits the activated assistance function (AF1, AF2, AF3).

3. Driver assistance system (10) according to one of the preceding claims, **characterized in that** an offset voltage can be fed to the laser imager (10.3), with which offset voltage the deflection mirror (3) of the laser imager (10.3) can be deflected into a desired central position (Z1, Z2, Z3).

4. Method for controlling a driver assistance system (10) having a multiplicity of assistance functions (AF1, AF2, AF3) such as a parking assistant, precrash detection system or the like, having a laser imager (10.3) for sensing the surroundings of the vehicle, whose output signals are made available for the assistance functions (AF1, AF2, AF3) of the driver assistance system (10), wherein the laser imager (10.3) can be adjusted to different operating modes (BA1, BA2, BA3, BA4), wherein when a specific assistance function (AF1, AF2, AF3) is activated, the laser imager (10.3) is adjusted to an operating mode (BA1, BA2, BA3, BA4) which is adapted to the respectively activated assistance function (AF1, AF2, AF3), **characterized in that** an operating mode (BA1, BA2, BA3, BA4) of the laser imager (10.3) is selected manually by means of an operator control device (BE).

5. Method according to Claim 4, **characterized in that** the deflection mirror (3) of the laser imager (10.3) is deflected into a first central position (Z1, Z2, Z3), **in that** with this deflection of the deflection mirror (3) a first image of the vehicle surroundings is sensed, **in that** the first image is stored, **in that** subsequently the deflection mirror (3) of the laser imager (10.3) is deflected into at least a second central position (Z1, Z2, Z3), **in that** in this central position (Z1, Z2, Z3) of the deflection mirror (3) a second image of the vehicle surroundings is sensed and **in that** subsequently the first and the second images are combined.

6. Method according to one of Claims 4 - 5, **characterized in that** an operating mode of the laser imager is selected as a function of operating parameters of the vehicle, in particular of the speed thereof.

7. Method according to one of Claims 4 - 6, **characterized in that** an operating mode of the laser imager is selected as a function of the traffic situation.

8. Method according to one of Claims 4 - 7, **characterized in that** the extent of the field of vision sensed by the laser imager is varied as a function of the speed.

9. Method according to one of Claims 4 - 8, **characterized in that** the extent of the field of vision is widened as the speed decreases.

10. Method according to one of Claims 4 - 9, **characterized in that** the field of vision is widened in one dimension.

11. Method according to one of the preceding claims, **characterized in that** the field of vision is changed in two dimensions.

## Revendications

1. Système (10) d'assistance au conducteur présentant plusieurs fonctions d'assistance (AF1, AF2, AF3), par exemple une assistance au stationnement, une détection de pré-collision, une LKS ("lane keeping support" - assistance au maintien sur la bande de circulation) et similaires,
le système étant doté d'un dispositif (10.3) d'imagerie laser permettant de saisir l'environnement du véhicule et dont les signaux de sortie sont délivrés aux fonctions d'assistance (AF1, AF2, AF3) du système (10) d'assistance au conducteur,
le dispositif (10.3) d'imagerie laser pouvant être commuté en différents modes de fonctionnement (BA1, BA2, BA3, BA4),
le système (10) d'assistance au conducteur comportant un module fonctionnel (10.2) qui, lors de l'activation d'une fonction d'assistance (AF1, AF2, AF3) du système (10) d'assistance au conducteur commute le dispositif (10.3) d'imagerie laser en un mode de fonctionnement (BA1, BA2, BA3, BA4) qui convient pour cette fonction d'assistance (AF1, AF2, AF3), **caractérisé en ce que**
le système présente un dispositif de commande (BE) qui, lorsqu'il est actionné par le conducteur, permet au conducteur de sélectionner manuellement un mode de fonctionnement (BA1, BA2, BA3, BA4) du dispositif (10.3) d'imagerie laser.

2. Système (10) d'assistance au conducteur selon la revendication 1, **caractérisé en ce que** le système (10) d'assistance au conducteur comporte un dispositif de mémoire (SP1) dans lequel des associations entre des modes de fonctionnement (BA1, BA2, BA3, BA4) du dispositif (10.3) d'imagerie laser à des fonctions d'assistance (AF1, AF2, AF3) du système (10) d'assistance au conducteur sont conservées, de telle sorte que lors de l'activation d'une fonction d'assistance (AF1, AF2, AF3), le dispositif (10.3) d'imagerie laser peut être commuté automatiquement en un mode de fonctionnement (BA1, BA2, BA3, BA4) qui convient pour la fonction d'assistance (AF1, AF2, AF3) activée.

3. Système (10) d'assistance au conducteur selon l'une des revendications précédentes, **caractérisé en ce qu'**une tension de décalage par laquelle le miroir de déviation (3) du dispositif (10.3) d'imagerie laser peut être dévié dans une position de centrage (Z1, Z2, Z3) souhaitée peut être appliquée sur le dispositif (10.3) d'imagerie laser.

4. Procédé de commande d'un système (10) d'assistance au conducteur présentant plusieurs fonctions d'assistance (AF1, AF2, AF3), par exemple une assistance au stationnement, une détection de pré-collision et similaires,
le système étant doté d'un dispositif (10.3) d'imagerie laser permettant de saisir l'environnement du véhicule et dont les signaux de sortie sont délivrés aux fonctions d'assistance (AF1, AF2, AF3) du système (10) d'assistance au conducteur,
le dispositif (10.3) d'imagerie laser pouvant être commuté en différents modes de fonctionnement (BA1, BA2, BA3, BA4),
lors de l'activation d'une fonction d'assistance déterminée (AF1, AF2, AF3), le dispositif (10.3) d'imagerie laser étant commuté en un mode de fonctionnement (BA1, BA2, BA3, BA4) qui convient pour cette fonction d'assistance (AF1, AF2, AF3), **caractérisé en ce que**
un mode de fonctionnement (BA1, BA2, BA3, BA4) du dispositif (10.3) d'imagerie laser est sélectionné manuellement au moyen d'un dispositif de commande (BE).

5. Procédé selon la revendication 4, **caractérisé en ce que** le miroir de déviation (3) du dispositif (10.3) d'imagerie laser est dévié dans une première position de centrage (Z1, Z2, Z3) **en ce qu'**une première image de l'environnement du véhicule est saisie avec cette déviation du miroir de déviation (3), **en ce que** la première image est conservée en mémoire, **en ce que** le miroir de déviation (3) du dispositif (10.3) d'imagerie laser est ensuite dévié en au moins une deuxième position de centrage (Z1, Z2, Z3), **en ce qu'**une deuxième image de l'environnement du véhicule est saisie dans cette position de centrage (Z1, Z2, Z3) du miroir de déviation (3) et **en ce qu'**ensuite la première et la deuxième image sont combinées.

6. Procédé selon l'une des revendications 4 et 5, **caractérisé en ce qu'**un mode de fonctionnement du dispositif d'imagerie laser est sélectionné en fonction de paramètres de conduite du véhicule et en particulier de sa vitesse.

7. Procédé selon l'une des revendications 4 à 6, **caractérisé en ce qu'**un mode de fonctionnement du dispositif d'imagerie laser est sélectionné en fonction de la situation du trafic.

8. Procédé selon l'une des revendications 4 à 7, **caractérisé en ce que** l'extension du champ de vision saisi par le dispositif d'imagerie laser est modifiée en fonction de la vitesse.

9. Procédé selon l'une des revendications 4 à 8, **caractérisé en ce que** l'extension du champ de vision saisi par le dispositif d'imagerie laser est agrandie lorsque la vitesse augmente.

10. Procédé selon l'une des revendications 4 à 9, **caractérisé en ce que** le champ de vision est agrandi dans une dimension.

11. Procédé selon l'une des revendications précédentes, **caractérisé en ce que** le champ de vision est modifié dans deux dimensions.
